# FASCICULE DE BREVET EUROPEEN

(11) **EP 3 640 087 B1**
(45) Date de publication et mention de la délivrance du brevet: **28.07.2021**
(21) Numéro de dépôt: 19203196.1
(22) Date de dépôt: 15.10.2019
(51) Int. Cl.: B60N 3/00

(54) **PLATEAU DE TABLE POUR UN HABITACLE DE VÉHICULE**
TISCHPLATTE FÜR FAHRZEUGINNENRAUM
TABLE TOP FOR A VEHICLE PASSENGER COMPARTMENT

(30) Priorité: 15.10.2018 FR 1859518
(43) Date de publication de la demande: 22.04.2020
(73) Titulaire: ALSTOM Transport Technologies, 93400 Saint-Ouen (FR)
(72) Inventeur: LE CORRE, Dominique, 67350 Val de Moder (FR)
(74) Mandataire: Lavoix

(56) Documents cités:
- WO-A1-2014/154666
- WO-A1-2016/146325
- DE-A1-102011 118 755
- GB-A- 2 433 434
- US-A1- 2014 338 572
- US-A1- 2017 355 465

## Description

La présente invention concerne un plateau de table pour un habitacle de véhicule accueillant des passagers, notamment un véhicule ferroviaire.

Les tables des véhicules accueillant des passagers, notamment les véhicules ferroviaires, offrent une surface horizontale pour travailler, manger ou entreposer des objets personnels.

Certains plateaux de tables sont conçus pour absorber l'énergie des passagers projetés sur la table lors d'une collision, limitant le risque de blessures abdominales sévères. Toutefois, cette protection est sommaire, car le plateau de table rigide reste un objet agressif (habituellement de 20 mm à 40 mm d'épaisseur).

Des plateaux de tables incorporent des parties pliables permettant un meilleur accès aux personnes à mobilité réduite. Ces parties pliables ne permettent néanmoins pas de réduire les risques de blessure.

US 2017/355465 décrit un plateau fixé sur l'arrière d'un siège et qui peut être déployé ou repoussé à l'encontre d'un ressort pour être logé dans le siège.

GB 2 433 434 décrit un support incliné adapté pour le repos des voyageurs et la sécurité, permettant une position inclinée dans laquelle le torse d'un voyageur repose sur le support.

DE 10 2011 118755 décrit un plateau de table pouvant être replié contre un dossier de fauteuil ou déployé à l'horizontale.

C'est à ces inconvénients qu'entend remédier l'invention en proposant un plateau de table pour un habitacle de véhicule accueillant des passagers, permettant de limiter les risques de blessures pour les passagers, tout en maintenant un confort d'utilisation et d'accès.

A cet effet, l'invention concerne un plateau de table pour un habitacle de véhicule accueillant des passagers, notamment un véhicule ferroviaire, ce plateau comportant une partie fixe reliée au véhicule et au moins une tablette mobile destinée à se trouver en regard d'un fauteuil ou siège passager, cette tablette étant mobile selon un axe de rotation parallèle à un plan du plateau.

Ce plateau est caractérisé en ce qu'il comporte un châssis sur lequel la tablette est montée avec possibilité de rotation selon l'axe parallèle au plan du plateau, ce châssis étant mobile en translation par rapport à la partie fixe du plateau selon un axe parallèle au plan du plateau et perpendiculaire à l'axe de rotation de la tablette, et en ce que :
- dans une configuration déployée, la tablette est déployée de façon jointive avec la partie fixe du plateau, le châssis étant dans une position d'éloignement maximal de la partie fixe du plateau;
- dans une configuration repliée, la tablette est pivotée selon son axe de rotation dans une position inclinée par rapport à la partie fixe du plateau, le châssis étant dans une position d'éloignement minimal de la partie fixe du plateau.

Grâce à l'invention, l'énergie d'un passager projeté sur le plateau de table peut être absorbée en grande partie et en augmentant la surface extérieure du plateau pour réduire les risques de blessures abdominales.

Selon des aspects avantageux mais non obligatoires de l'invention, un tel plateau de table peut incorporer une ou plusieurs des caractéristiques suivantes, prises selon toute combinaison techniquement admissible :
- Le châssis est apte à passer de la position d'éloignement maximal à la position d'éloignement minimal sous l'action d'une poussée d'une partie d'un corps d'un passager.
- La tablette comporte une partie inclinée dont une extrémité, formant une partie du plateau située le plus près d'un passager assis sur un fauteuil ou siège avoisinant, est située en dessous de l'axe de rotation de la tablette.
- Un bord de la tablette situé en regard de la partie fixe du plateau comporte une partie inférieure biseautée, et la partie fixe du plateau comprend un bord adapté pour coopérer avec la partie inférieure biseautée de manière à initier la rotation de la tablette autour de son axe lors de la translation du châssis.
- En position inclinée, la tablette est orientée selon un angle compris entre 70° et 90° par rapport à la partie fixe du plateau.
- La tablette est montée sur le châssis au moyen de charnières à friction aptes à maintenir la tablette dans une position inclinée.
- Le châssis est relié à la partie fixe du plateau par des bras articulés sur la partie fixe du plateau et sur le châssis.
- Le plateau comprend un dispositif d'amortissement disposé entre le châssis et la partie fixe du plateau.
- Le dispositif d'amortissement est un vérin dont une partie est fixée au châssis et une autre partie est fixée à la partie fixe du plateau.
- Le dispositif d'amortissement est un axe fixé au châssis et coulissant avec friction dans la partie fixe du plateau.

L'invention sera mieux comprise et d'autres avantages de celle-ci apparaîtront plus clairement à la lumière de la description qui va suivre d'un plateau de table conforme à son principe, faite à titre d'exemple non limitatif en référence aux dessins annexés, dans lesquels :
- la figure 1 est une vue en perspective d'un plateau de table conforme à l'invention, de fauteuils ainsi que d'un passager assis sur un fauteuil ;
- la figure 2 est une vue latérale du plateau de table et du passager assis sur un fauteuil ;
- les figures 3 à 5 sont des vues latérales similaires à la figure 2, illustrant trois phases d'une projection du passager contre le plateau de table ;
- la figure 6 est une vue en perspective du plateau de table de la figure 1, selon un autre angle ;

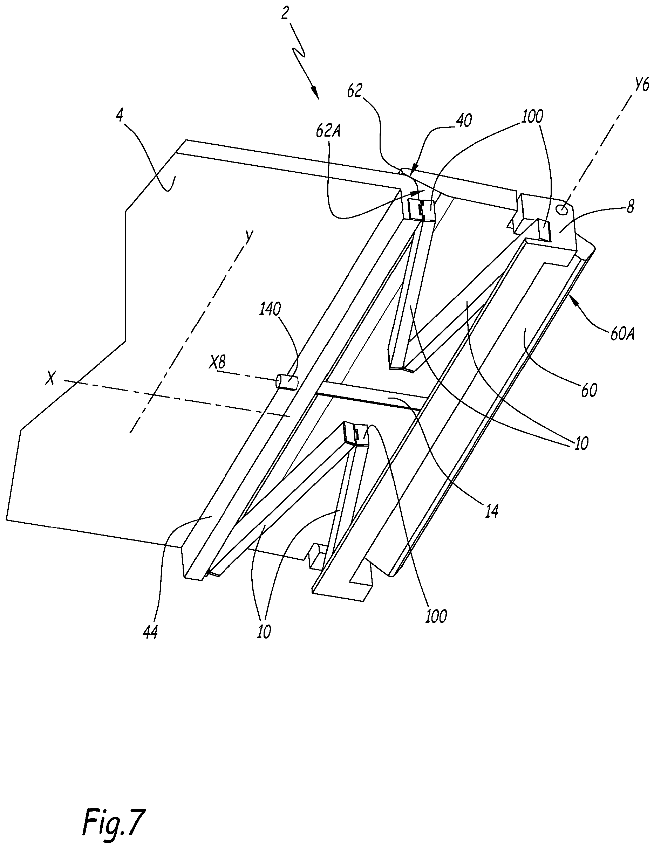

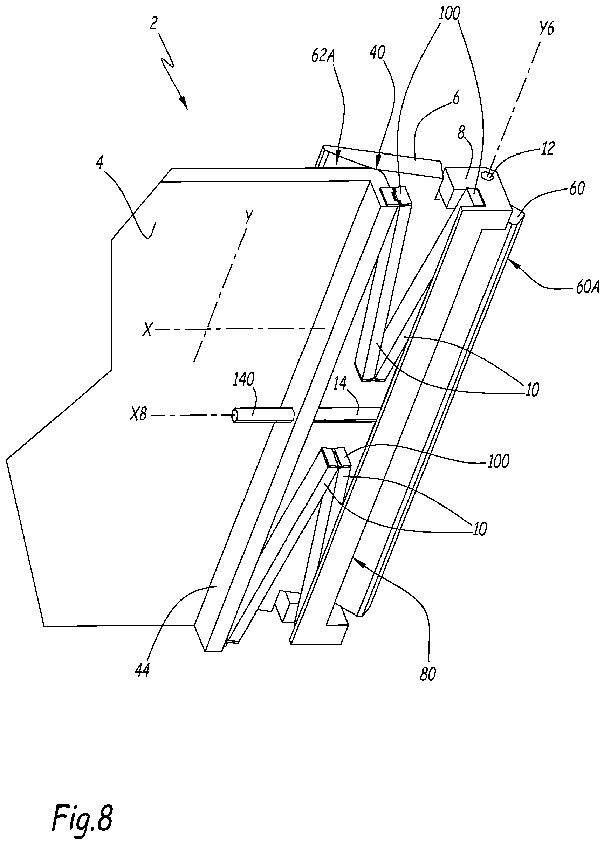

- les figures 7 à 9 sont des vues en perspective similaires à la figure 6, montrant trois positions d'une tablette du plateau de table dans un mouvement de rotation.

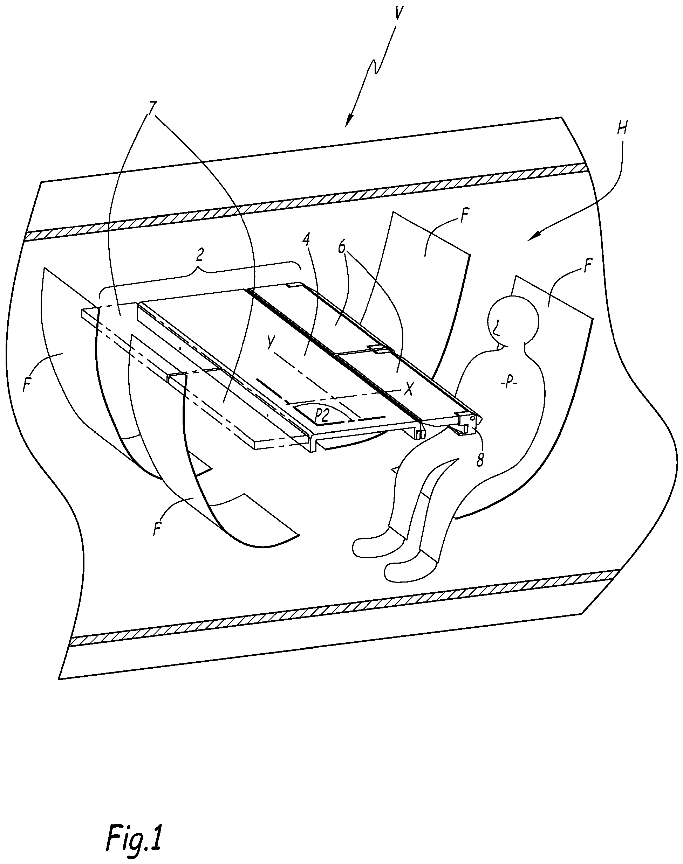

La figure 1 représente un plateau 2 de table pour un habitacle H d'un véhicule V accueillant des passagers. Ce véhicule V peut être notamment un véhicule ferroviaire, tel qu'une voiture formant une partie d'un train.

L'habitacle H comporte également plusieurs fauteuils F ou sièges disposés autour du plateau 2, l'un de ces fauteuils F étant occupé par un passager P assis.

On définit une direction longitudinale X du véhicule V, qui correspond à la direction de déplacement de ce véhicule V. On définit également une direction transversale Y, orthogonale à la direction X. Les directions X et Y forment un plan P2 dans lequel le plateau 2 est compris.

Le plateau 2 comporte une partie fixe 4 et au moins une tablette 6 mobile destinée à se trouver en regard d'un des fauteuils F. La tablette 6 est mobile par rapport à la partie fixe 4 en rotation selon un axe de rotation Y6, parallèle à la direction transversale Y.

La partie fixe 4 ne comporte aucun degré de liberté en rotation ou en translation selon les directions X ou Y par rapport au véhicule V. La partie fixe 4 peut être supportée par une attache directe dans une paroi non représentée du véhicule V, ou bien par un pied non représenté fixé au sol, ou bien par une combinaison de ces deux solutions.

Le plateau 2 comporte également un châssis 8 sur lequel la tablette 6 est montée avec possibilité de rotation selon l'axe de rotation Y6. Ce châssis 8 est mobile en translation par rapport à la partie fixe 4 selon un axe X8 parallèle au plan P2 et perpendiculaire à l'axe de rotation Y6 de la tablette 6. L'axe X8 est donc parallèle à la direction longitudinale X.

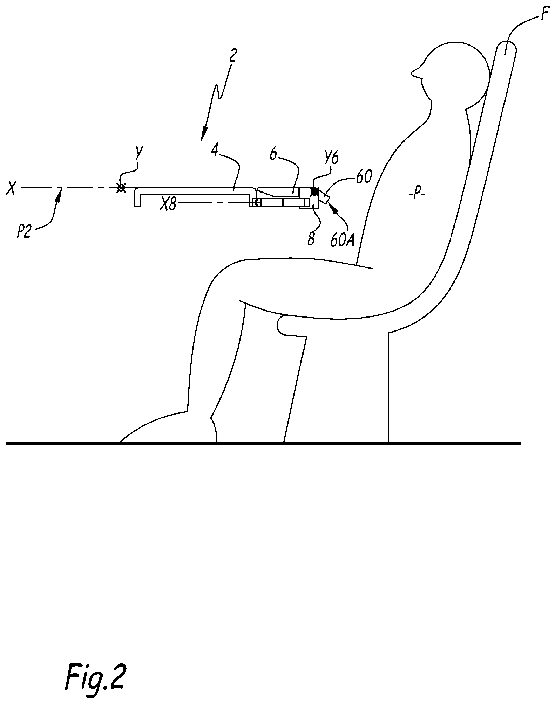

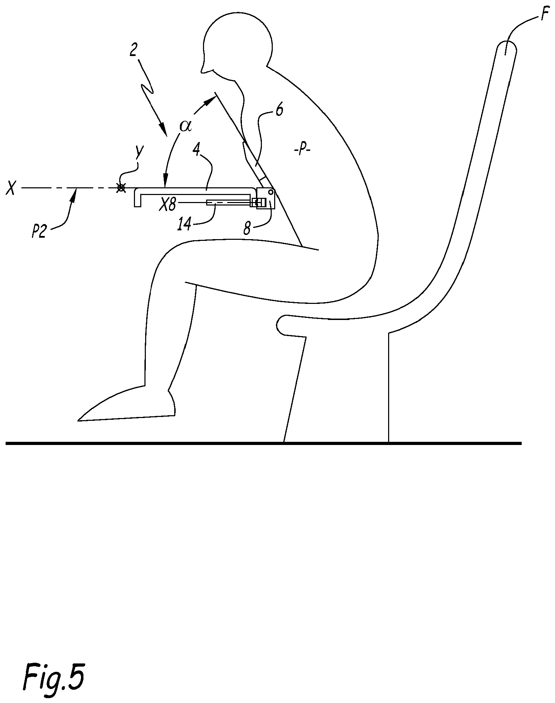

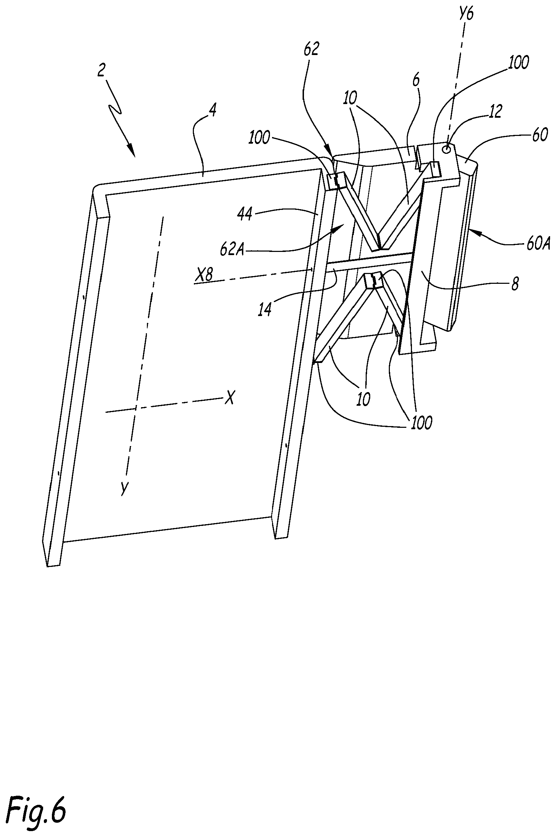

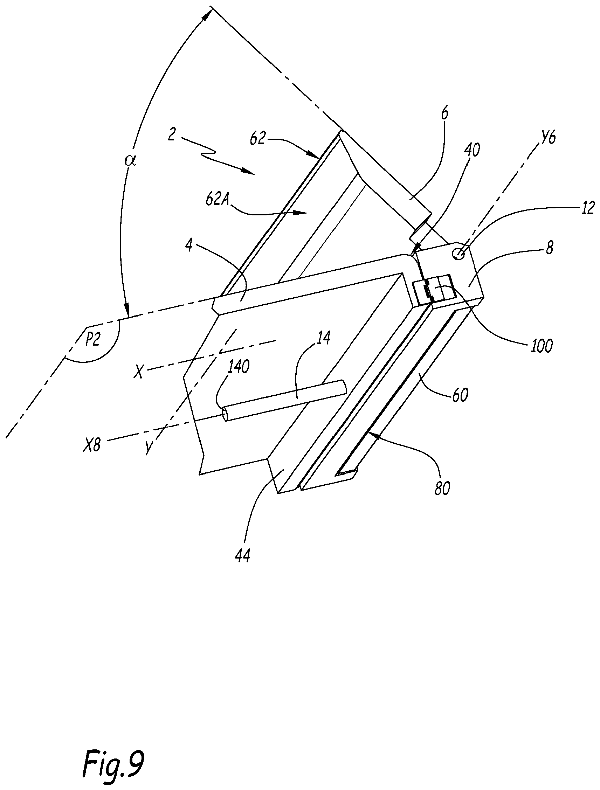

Cette double mobilité permet l'obtention des configurations suivantes :
- dans une configuration déployée représentée aux figures 2 et 6, la tablette 6 est déployée de façon jointive avec la partie fixe 4 dans le plan P2, et le châssis 8 est dans une position d'éloignement maximal de la partie fixe 4 ;
- dans une configuration repliée représentée aux figures 5 et 9, la tablette 6 est pivotée selon son axe de rotation Y6 dans une position inclinée par rapport à la partie fixe 4, et le châssis 8 est dans une position d'éloignement minimal de la partie fixe 4.

Cette double mobilité offre, outre le confort des passagers, par exemple pour lire ou pour s'installer, notamment pour les personnes à mobilité réduite, une meilleure prévention des risques de blessures abdominales en cas de collision entrainant la projection d'un passager sur le plateau 2.

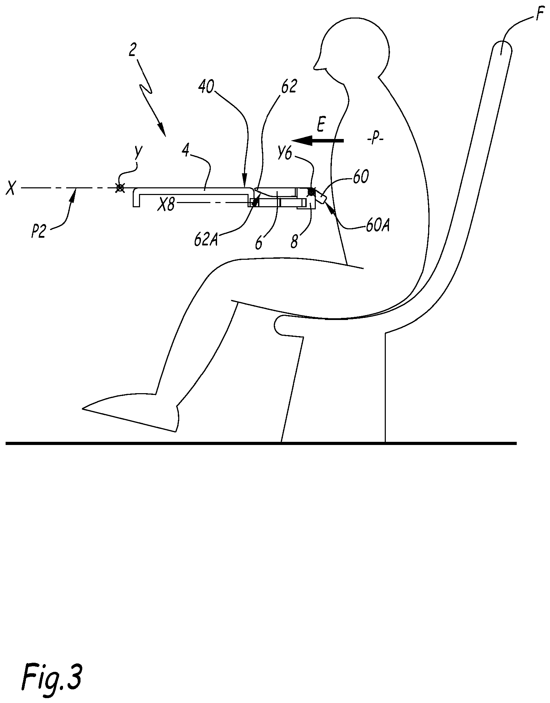

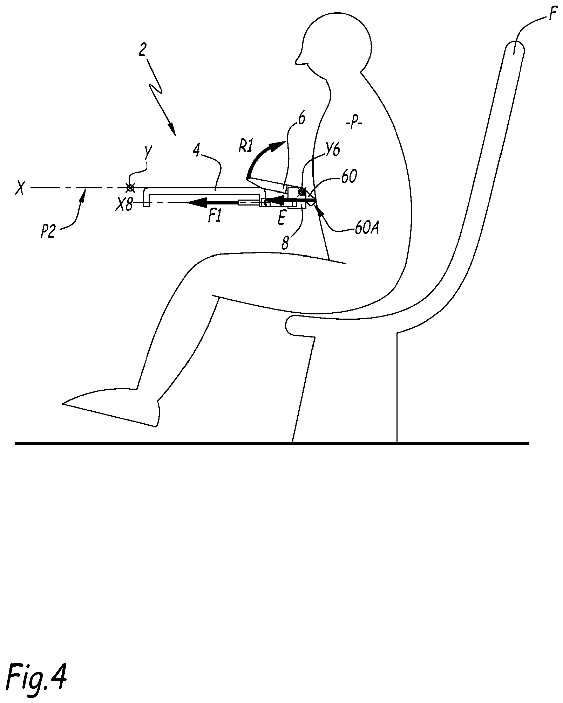

En effet, le châssis 8 est apte à passer de la position d'éloignement maximal à la position d'éloignement minimal sous l'action d'une poussée d'une partie d'un corps du passager P. La tablette 6 comporte une partie inclinée 60 dont une extrémité 60A, formant une partie du plateau 2 située au plus près du passager P assis sur un fauteuil F avoisinant, est située en dessous de l'axe de rotation Y6 de la tablette 6. De ce fait, lorsque le passager P est projeté sur la tablette 6 en cas de collision (figures 3 et 4), un effort E est exercé sur cette extrémité 60A avec un bras de levier par rapport à l'axe de rotation Y6, ce qui a pour effet la rotation de la tablette 6. La rotation de la tablette 6 a pour but d'augmenter l'aire de la surface qui heurte le corps du passager P.

Pour absorber l'énergie du passager P projeté contre le plateau 2, la translation du châssis 8 est simultanée à la rotation de la tablette 6. Un bord 62 de la tablette 6 situé en regard de la partie fixe 4 comporte une partie inférieure biseautée 62A. La partie fixe 4 comprend un bord 40 adapté pour coopérer avec la partie inférieure biseautée 62A de manière à initier la rotation de la tablette 6 autour de son axe Y6 lors de la translation du châssis 8. Par exemple, le bord 40 peut être arrondi ou chanfreiné pour induire un glissement de la partie biseautée 62A.

Ainsi, lors d'une collision le fonctionnement du plateau 2 est le suivant : initialement (figure 2), le passager P est assis contre le fauteuil F et est éloigné de la tablette 6. La tablette 6 est déployée selon le plan P2 de façon jointive avec la partie fixe 4, et le châssis 8 est éloigné de la partie fixe 4.

A la figure 3, une collision a lieu. Le passager P est décollé de son fauteuil F et est projeté contre la tablette 6. Le passager P exerce alors l'effort E selon la direction X. A la figure 4, le passager P est entré en contact avec la tablette 6, qui a commencé une rotation selon la flèche R1, simultanée à une translation du châssis 8 selon la flèche F1.

A la figure 5, le châssis 8 s'est complètement rapproché de la partie fixe 4, et la tablette 6 est arrivée dans une position inclinée, dans laquelle elle est orientée selon un angle a compris entre 70° et 90° par rapport à la partie fixe 4. Dans cette position, la tablette 6 offre une surface plus grande et moins agressive que l'extrémité 60A, ce qui permet de mieux répartir l'énergie du passager P sur la poitrine et l'abdomen et réduire les risques de blessures abdominales sérieuses.

Le châssis 8 présente une partie en retrait 80 destinée à loger la partie inclinée 60 de la tablette 6 dans la position repliée (figure 9) ainsi qu'à limiter cette position par une butée.

Selon un mode de réalisation avantageux, la tablette 6 est montée sur le châssis 8 au moyen de charnières à friction 12 et d'axe Y6 aptes à maintenir la tablette 6 dans une position inclinée, par exemple pour un passager qui souhaite lire.

Le châssis 8 est relié à la partie fixe 4 par des bras 10 articulés sur la partie fixe 4 et sur le châssis 8. Par exemple, le châssis 8 peut être relié par deux paires de bras 10. Les bras 10 sont reliés entre eux et à la partie fixe 4 par des charnières 100. Les bras 10 permettent de guider la translation du châssis 8 et de soutenir la tablette 6 en configuration déployée.

De manière optionnelle, le plateau 2 comprend un dispositif d'amortissement disposé entre le châssis 8 et la partie fixe 4. Le dispositif d'amortissement peut être un axe 14 fixé au châssis 8 et coulissant avec friction dans la partie fixe 4. L'axe 14 comprend une extrémité 140 initialement masquée dans une partie 44 de la partie fixe 4. Lors de la translation du châssis 8, l'extrémité 140 fait saillie de façon progressive jusqu'à que l'axe 140 soit complètement sorti de la partie 44.

Selon une variante non représentée, le dispositif d'amortissement peut être un vérin dont une partie est fixée au châssis et une autre partie est fixée à la partie fixe du plateau, ou bien tout autre dispositif adapté.

Sur la figure 1 sont représentées deux tablettes 6 et deux tablettes 7 de type classique en traits discontinus. En variante, les quatre tablettes du plateau 2 peuvent être du type de la tablette 6.

Le plateau de table 2 peut être installé dans un habitacle de véhicule autre que ferroviaire, par exemple dans un véhicule de transport routier.

## Revendications

1. Plateau (2) de table pour un habitacle (H) de véhicule (V) accueillant des passagers, notamment un véhicule ferroviaire, ce plateau (2) comportant une partie fixe (4) reliée au véhicule (V) et au moins une tablette mobile (6) destinée à se trouver en regard d'un fauteuil (F) ou siège passager, cette tablette (6) étant mobile selon un axe de rotation (Y6) parallèle à un plan (P2) du plateau (2),
**caractérisé en ce qu'**il comporte un châssis (8) sur lequel la tablette (6) est montée avec possibilité de rotation selon l'axe parallèle (Y6) au plan (P2) du plateau (2), ce châssis (8) étant mobile en translation par rapport à la partie fixe (4) du plateau (2) selon un axe (X8) parallèle au plan (P2) du plateau (2) et perpendiculaire à l'axe de rotation (Y6) de la tablette (6), et **en ce que** :
- dans une configuration déployée, la tablette (6) est déployée de façon jointive avec la partie fixe (4) du plateau (2), le châssis (8) étant dans une position d'éloignement maximal de la partie fixe (4) du plateau (2);
- dans une configuration repliée, la tablette (6) est pivotée selon son axe de rotation (Y6) dans une position inclinée par rapport à la partie fixe (4) du plateau (2), le châssis (8) étant dans une position d'éloignement minimal de la partie fixe (4) du plateau (2).

2. Plateau selon la revendication 1, **caractérisé en ce que** le châssis (8) est apte à passer de la position d'éloignement maximal à la position d'éloignement minimal sous l'action d'une poussée (E) d'une partie d'un corps d'un passager (P).

3. Plateau selon la revendication 2, **caractérisé en ce que** la tablette (6) comporte une partie inclinée (60) dont une extrémité (60A), formant une partie du plateau (2) située le plus près d'un passager (P) assis sur un fauteuil (F) ou siège avoisinant, est située en dessous de l'axe de rotation (Y6) de la tablette (6).

4. Plateau selon l'une des revendications 2 et 3, **caractérisé en ce qu'**un bord (62) de la tablette (6) situé en regard de la partie fixe (4) du plateau (2) comporte une partie inférieure biseautée (62A), et **en ce que** la partie fixe (4) du plateau (2) comprend un bord adapté (40) pour coopérer avec la partie inférieure biseautée (62A) de manière à initier la rotation de la tablette (6) autour de son axe (Y6) lors de la translation du châssis (8).

5. Plateau selon l'une des revendications précédentes, **caractérisé en ce qu'**en position inclinée, la tablette (6) est orientée selon un angle (a) compris entre 70° et 90° par rapport à la partie fixe (4) du plateau (2).

6. Plateau selon l'une des revendications précédentes, **caractérisé en ce que** la tablette (6) est montée sur le châssis (8) au moyen de charnières à friction (12) aptes à maintenir la tablette (6) dans une position inclinée.

7. Plateau selon l'une des revendications précédentes, **caractérisé en ce que** le châssis (8) est relié à la partie fixe (4) du plateau (2) par des bras (10) articulés sur la partie fixe (4) du plateau (2) et sur le châssis (8).

8. Plateau selon l'une des revendications précédentes, **caractérisé en ce qu'**il comprend un dispositif d'amortissement disposé entre le châssis (8) et la partie fixe (4) du plateau (2).

9. Plateau selon la revendication 8, **caractérisé en ce que** le dispositif d'amortissement est un vérin dont une partie est fixée au châssis (8) et une autre partie est fixée à la partie fixe (4) du plateau (2).

10. Plateau selon la revendication 8, **caractérisé en ce que** le dispositif d'amortissement est un axe (14) fixé au châssis (8) et coulissant avec friction dans la partie fixe (4) du plateau (2).

## Patentansprüche

1. Tisch-Platte (2) für eine Fahrgastzelle (H) eines Fahrzeugs (V), welche Fahrgäste aufnimmt, insbesondere eines Schienenfahrzeugs, wobei diese Platte (2) einen feststehenden Teil (4), der mit dem Fahrzeug (V) verbunden ist, und wenigstens ein bewegbares Tischbrett (6) aufweist, das dazu bestimmt ist, sich gegenüber einem Fahrgast-Sessel (F) oder
- Sitz zu befinden, wobei dieses Tischbrett (6) um eine Rotationsachse (Y6) bewegbar ist, die parallel zu einer Ebene (P2) der Platte (2) ist,
**dadurch gekennzeichnet, dass** sie ein Gehäuse (8) aufweist, an welchem das Tischbrett (6) montiert ist mit der Möglichkeit zur Rotation um die zur Ebene (P2) der Platte (2) parallele Achse (Y6), wobei dieses Gehäuse (8) translationsbewegbar ist bezüglich des feststehenden Teils (4) der Platte (2) entlang einer Achse (X8), die parallel zu der Ebene (P2) der Platte (2) und senkrecht zu der Rotationsachse (Y6) des Tischbretts (6) ist, und dass:
- in einer Ausgefahren-Konfiguration, das Tischbrett (6) in einer Weise aneinandergesetzt mit dem feststehenden Teil (4) der Platte (2) ausgefahren ist, wobei das Gehäuse (8) in einer Position maximalen Abstands zu dem feststehenden Teil (4) der Platte (2) ist,
- in einer Eingefahren-Konfiguration, das Tischbrett (6) um seine Rotationsachse (Y6) geschwenkt ist in eine Position geneigt bezüglich des feststehenden Teils (4) der Platte (4), wobei das Gehäuse (8) in einer Position minimalen Abstands zu dem feststehenden Teil (4) der Platte (2) ist.

2. Platte gemäß Anspruch 1, **dadurch gekennzeichnet, dass** das Gehäuse (8) imstande ist, von der Position maximalen Abstands in die Position minimalen Abstands überzugehen unter der Wirkung eines Stoßes (E) von einem Teil eines Körpers eines Fahrgasts (P).

3. Platte gemäß Anspruch 2, **dadurch gekennzeichnet, dass** das Tischbrett (6) einen geneigten Teil (60) aufweist, von dem ein Ende (60a), das einen Teil der Platte (2) bildet, der einem Fahrgast (P), der auf einem benachbarten Sessel (F) oder Sitz sitzt, am nächsten angeordnet ist, unterhalb der Rotationsachse (Y6) des Tischbretts (6) angeordnet ist.

4. Platte gemäß einem der Ansprüche 2 und 3, **dadurch gekennzeichnet, dass** ein Rand (62) des Tischbretts (6), der gegenüber dem feststehenden Teil (4) der Platte (2) angeordnet ist, einen unteren, abgeschrägten Teil (62A) aufweist, und dass der feststehende Teil (4) der Platte (2) einen angepassten Rand (40) aufweist zum Zusammenwirken mit dem unteren, abgeschrägten Teil (62A) in einer Weise, um die Rotation des Tischbretts (6) um dessen Achse (Y6) zu initiieren während der Translation des Gehäuses (8).

5. Platte gemäß einem der vorhergehenden Ansprüche, **dadurch gekennzeichnet, dass**, in geneigter Position, das Tischbrett (6) bezüglich des feststehenden Teils (4) der Platte (2) entlang einem Winkel (α) ausgerichtet ist, der zwischen 70° und 90° beträgt.

6. Platte gemäß einem der vorhergehenden Ansprüche, **dadurch gekennzeichnet, dass** das Tischbrett (6) an dem Gehäuse (8) montiert ist mittels Reibscharnieren (12), die imstande sind, das Tischbrett (6) in einer geneigten Position zu halten.

7. Platte gemäß irgendeinem der vorhergehenden Ansprüche, **dadurch gekennzeichnet, dass** das Gehäuse (8) mit dem feststehenden Teil (4) der Platte (2) verbunden ist durch Arme (10), die an dem feststehenden (4) der Platte (2) und an dem Gehäuse (8) angelenkt sind.

8. Platte gemäß irgendeinem der vorhergehenden Ansprüche, **dadurch gekennzeichnet, dass** sie eine Dämpfungsvorrichtung aufweist, die zwischen dem Gehäuse (8) und dem feststehenden Teil (4) der Platte (2) angeordnet ist.

9. Platte gemäß Anspruch 8, **dadurch gekennzeichnet, dass** die Dämpfungsvorrichtung ein Zylinder ist, von dem ein Teil an dem Gehäuse (8) befestigt ist und ein anderer Teil an dem feststehenden Teil (4) der Platte (2) befestigt ist.

10. Platte gemäß Anspruch 8, **dadurch gekennzeichnet, dass** die Dämpfungsvorrichtung eine Achse (14) ist, die an dem Gehäuse (8) befestigt ist und mit Reibung in dem feststehenden Teil (4) der Platte (2) verschiebbar ist.

## Claims

1. A table top (2) for a vehicle (V) compartment (H) accommodating passengers, in particular a rail vehicle, this table top (2) including a stationary part (4) connected to the vehicle (V) and at least one moving tray (6) intended to be located across from a passenger chair (F) or seat, this tray (6) being movable with reference to an axis of rotation (Y6) parallel to a plane (P2) of the table top (2),
**characterized in that** it comprises a chassis (8) on which the tray (6) is mounted with the possibility of rotating with reference to the axis (Y6) parallel to the plane (P2) of the tray (2), this chassis (8) being movable in translation relative to the stationary part (4) of the tray (2) along an axis (X8) parallel to the plane (P2) of the tray (2) and perpendicular to the axis (Y6) of rotation of the tray (6), and **in that**:
- in a deployed configuration, the tray (6) is deployed jointly with the stationary part (4) of the table top (2), the chassis (8) being in a position maximally distanced from the stationary part (4) of the table top (2);
- in a folded configuration, the tray (6) is pivoted about its axis of rotation (Y6) in an inclined position relative to the stationary part (4) of the table top (2), the chassis (8) being in a position minimally distanced from the stationary part (4) of the table top (2).

2. The table top according to claim 1, **characterized in that** the chassis (8) is able to go from the maximally distanced position to the minimally distanced position under the action of thrust (E) from a body part of a passenger (P).

3. The table top according to claim 2, **characterized in that** the tray (6) includes an inclined part (60) one end (60A) of which, forming a part of the table top (2) located closest to a passenger (P) seated on an adjacent chair (F) or seat, is located below the axis of rotation (Y6) of the tray (6).

4. The table top according to one of claims 2 and 3, **characterized in that** an edge (62) of the tray (6) located across from the stationary part (4) of the table top (2) includes a beveled lower part (62A), and the stationary part (4) of the table top (2) comprises an edge (40) suitable for cooperating with the beveled lower part (62A) so as to initiate the rotation of the tray (6) around its axis (Y6) during the translation of the chassis (8).

5. The table top according to one of the preceding claims, **characterized in that** in the inclined position, the tray (6) is oriented of an angle (a) comprised between 70° and 90° relative to the stationary part (4) of the table top (2).

6. The table top according to one of the preceding claims, **characterized in that** the tray (6) is mounted on the chassis (8) using friction hinges (12) able to keep the tray (6) in an inclined position.

7. The table top according to one of the preceding claims, **characterized in that** the chassis (8) is connected to the stationary part (4) of the table top (2) by arms (10) articulated on the stationary part (4) of the table top (2) and on the chassis (8).

8. The table top according to one of the preceding claims, **characterized in that** it comprises a shock absorbing device arranged between the chassis (8) and the stationary part (4) of the table top (2).

9. The table top according to claim 8, **characterized in that** the shock absorbing device is a jack, one part of which is fastened to the chassis (8) and another part of which is fastened to the stationary part (4) of the table top (2).

10. The table top according to claim 8, **characterized in that** the shock absorbing device is a shaft (14) fastened to the chassis (8) and sliding with friction in the stationary part (4) of the table top (2).
